(19) Europäisches Patentamt
European Patent Office
Office européen des brevets

(11) **EP 1 821 114 A2**

(12) **EUROPEAN PATENT APPLICATION**

(43) Date of publication:
**22.08.2007 Bulletin 2007/34**

(51) Int Cl.:
***G01S 1/00*** *(2006.01)*     ***G01S 5/14*** *(2006.01)*

(21) Application number: **07102364.2**

(22) Date of filing: **14.02.2007**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **15.02.2006 KR 20060014602**

(71) Applicant: **Samsung Electronics Co., Ltd.**
**Suwon-si, Gyeonggi-Do (KR)**

(72) Inventor: **Bae, Hyung-Jin**
**c/o SAMSUNG ELECTRONICS CO., LTD**
**Suwon-si (KR)**

(74) Representative: **Grünecker, Kinkeldey,**
**Stockmair & Schwanhäusser**
**Anwaltssozietät**
**Maximilianstrasse 58**
**80538 München (DE)**

(54) **Apparatus and method for sharing a TCXO of a mobile terminal using a global positioning system in a mobile communication system**

(57) An apparatus and a method for sharing a temperature compensated crystal oscillator (TCXO) of a mobile terminal using a global positioning system (GPS). A communication system processor performs a process for a mobile communication system, computes a frequency variation according to a frequency change and outputs a value corresponding to the computed frequency variation to a system TCXO and a GPS processor. The GPS processor receives and processes a GPS signal, receives the value of the computed frequency variation from the communication system processor, and performs an operation for frequency compensation according to the value.

FIG.3

**Description**

The present invention generally relates to a global positioning system such as GPS, and more particularly to an apparatus and method for sharing a temperature compensated crystal oscillator (TCXO) of a mobile terminal with a GPS function in a mobile communication system.

Global positioning system (GPS) satellites broadcast ephemeris and system time information while circling the earth along a designated orbit. A GPS receiver on the ground can set its position from the broadcast information. The GPS receiver sets an exact time and its position by computing relative reception times of GPS signals simultaneously received from at least four GPS satellites. On the other hand, the GPS receiver may use an assisted GPS (AGPS) mode and autonomous mode or stand-alone mode. In particular, in the autonomous mode or stand-alone mode, the GPS receiver independently and directly acquires a satellite signal from each GPS satellite without receiving satellite signal acquisition information from an assisted GPS server installed in a mobile communication base station, performs time-consuming tracking and decoding processes for the acquired signal, acquires ephemeris information of each satellite, and computes a position of the GPS receiver.

Herein, the AGPS server connected to a code division multiple access (CDMA) network provides a mobile terminal with a positioning service, and includes a reference GPS receiver and an operation device. The reference GPS receiver successively tracks and/or monitors GPS satellite signals, provides information necessary for the positioning service of the mobile terminal, and provides an operation result relating to a position with respect to a measurement value obtained from the mobile terminal, and so on. A communication protocol between the AGPS server and the mobile terminal follows the IS-801 standard.

As described above, when the GPS receiver operates in the autonomous mode or stand-alone mode, phase lock for a received GPS signal should be continuously maintained to demodulate navigation data including navigation information. To maintain the phase lock for the GPS signal, a temperature compensated crystal oscillator (TCXO) of the GPS receiver should not be varied due to influence of a different system for a predefined time.

If a GPS operation unit and a communication modem sharing the TCXO of the mobile terminal operate in switching mode, a TCXO control operation of the communication modem, i.e., an automatic frequency control (AFC) operation, should be stopped when the GPS receiver operates in the autonomous mode. However, the conventional technology has a problem in that the AFC function cannot be continuously stopped for the normal operation of the communication modem.

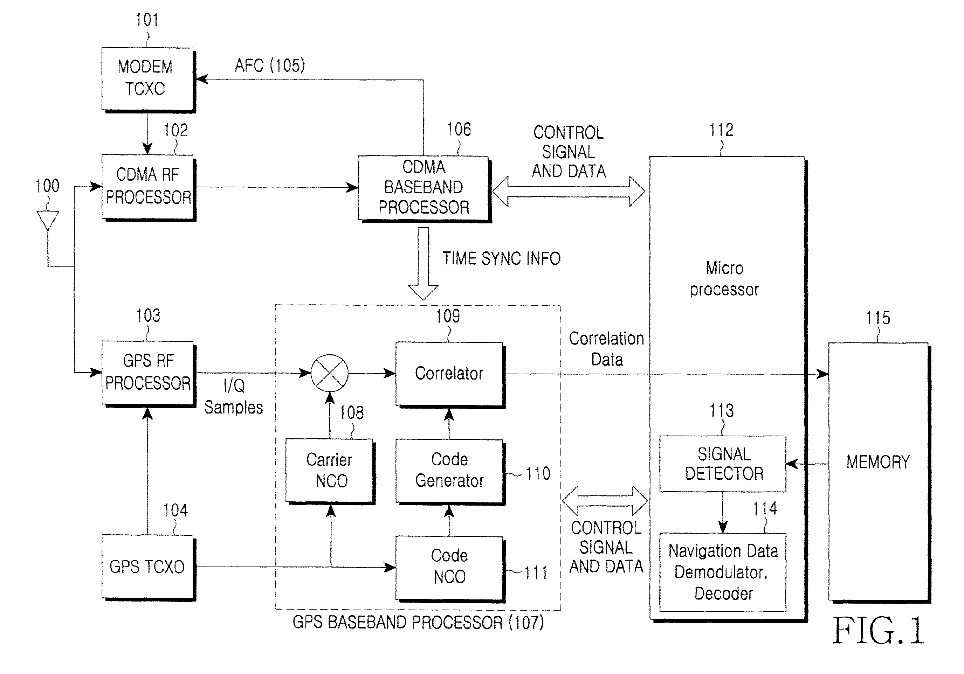

In a civil GPS satellite signal, a navigation data bit of a 20ms period is conventionally modulated in a coarse acquisition (C/A) code of a 1ms period. FIG. 1 is a block diagram illustrating a structure of a receiver in a mobile terminal using a GPS according to the prior art. Referring to FIG.1, the mobile communication terminal includes an antenna 100 for transmitting a data signal to and receiving a data signal from a GPS satellite, a modem TCXO 101, a code division multiple access (CDMA) radio frequency (RF) processor 102 for down-converting the frequency of the cdma RF signal into baseband frequency, a GPS RF processor 103 for down-converting the frequency of the GPS RF signal into baseband frequency, a GPS TCXO 104, an automatic frequency control (AFC) signal AFC, a CDMA baseband processor 106, a GPS baseband processor 107, and a memory 115. The GPS baseband processor 107 includes a carrier numerically controlled oscillator (NCO) 108, a correlator, a code generator 110, and a code NCO.

In FIG. 1, a modem TCXO 101 can control a frequency value by receiving an automatic frequency control (AFC) signal AFC 105. As illustrated in FIG. 1, the GPS receiver of the mobile terminal measures relative arrival times of GPS satellite signals received from at least four GPS satellites, i.e., C/A code delay values, and sets an exact present time and position of the mobile terminal. At this time, the GPS receiver should have ephemeris information such as current position and speed information of each satellite in order to directly compute the position.

As described above, when the GPS receiver operates in the autonomous mode or stand-alone mode, it directly obtains the ephemeris information by demodulating navigation data carried on a satellite signal. A process for directly obtaining the ephemeris information by demodulating the navigation data carried on the satellite signal will be described.

A navigation data demodulator 114 obtains ephemeris information of each satellite by successively demodulating and decoding a navigation data bit corresponding to navigation information of a 20ms period for about 30 seconds from a satellite signal detected through a signal detector 113 of FIG. 1. To correctly demodulate the GPS navigation data, a carrier-phase tracking loop of the GPS receiver controls a carrier numerically controlled oscillator (NCO) 108 and maintains phase lock for a received GPS signal.

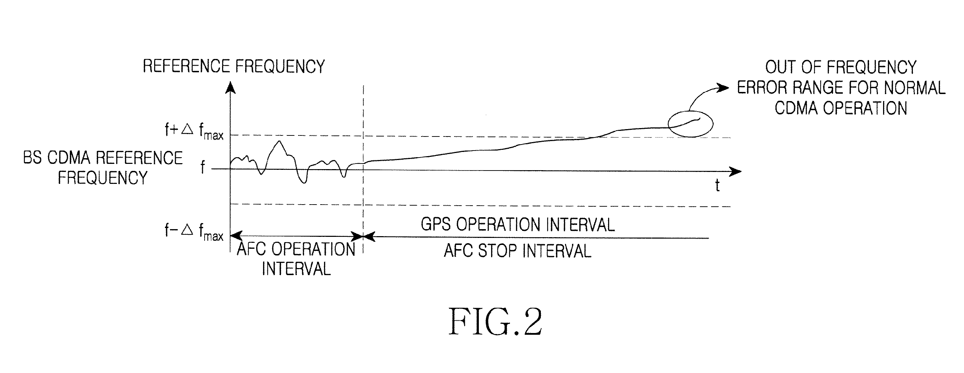

Using a shared TCXO and an absolute time of a CDMA system, the GPS receiver embedded in the mobile terminal can improve the reception sensitivity of the GPS signal. Also, the number of components and the cost and size of the mobile terminal can be reduced. However, when an AFC operation for controlling the TCXO is performed on the basis of a signal of a base station received in the CDMA mobile terminal in the case where the TCXO is shared, a reference frequency varies at a high rate as indicated in an AFC operation interval of FIG. 2 which is a graph illustrating a reference error of a temperature compensated crystal oscillator (TCXO). This affects a carrier phase generated from the carrier NCO 108 within a GPS baseband processor 107. As the carrier phase is affected, the phase lock is not maintained in the carrier-phase tracking loop and therefore navigation data cannot be correctly demodulated.

When the GPS operation is performed in the autonomous mode or stand-alone mode, the navigation data should be successively demodulated for 30 seconds or more. In this situation, for example, when the control of the TCXO is stopped for 30 seconds or more in the case where the TCXO is shared, the reference frequency of the TCXO is slowly drifted as indicated in an AFC stop interval of FIG. 2. As a result, there is a problem in that the CDMA communication modem cannot operate normally.

It is, therefore, the object of the present invention to provide an apparatus and method that can share a TCXO with a communication system when a GPS operation unit embedded in a mobile terminal operates in autonomous mode or stand-alone mode in a mobile communication system.

This object is solved by the subject matter of the independent claims.

Preferred embodiments are defined in the dependent claims.

It is an aspect of the present invention to provide an apparatus and method that can improve GPS performance and reduce manufacturing cost by sharing a TCXO with a communication system when a GPS operation unit embedded in a mobile terminal operates in an autonomous or stand-alone mode in a mobile communication system.

In accordance with an aspect of the present invention, there is provided an apparatus for sharing a TCXO of a mobile terminal using a GPS, the apparatus including a communication system processor for performing a process for a mobile communication system, computing a frequency variation according to a frequency change and outputting the computed frequency variation to a system TCXO and a GPS processor; and the GPS processor for receiving and processing a GPS signal, receiving the computed frequency variation from the communication system processor, and performing an operation for frequency compensation according to the received value.

In accordance with another aspect of the present invention, there is provided a method for sharing a TCXO of a mobile terminal for a GPS, the method including detecting a frequency variation of a communication system and comparing the frequency variation with a predetermined reference value; adjusting a frequency value of a system TCXO according to a comparison result; and synchronizing the TCXO to a base station signal according to an automatic frequency control operation.

The above and other features and advantages of the present invention will be more clearly understood from the following detailed description taken in conjunction with the accompanying drawings, in which:

FIG. 1 is a block diagram illustrating a structure of a conventional mobile terminal with a global positioning system (GPS) receiver according to the prior art;

FIG. 2 is a graph illustrating a reference frequency error of a TCXO in the conventional mobile terminal according to the prior art;

FIG. 3 is a block diagram illustrating a structure of a mobile terminal with a GPS receiver in accordance with the present invention;

FIG. 4 is a block diagram illustrating main components of FIG. 3;

FIG. 5 is a graph illustrating a reference frequency error of a TCXO in the mobile terminal in accordance with the present invention; and

FIG. 6 is a flowchart illustrating an operation for sharing the TCXO in the mobile terminal in accordance with the present invention.

Preferred embodiments of the present invention will be described in detail herein below with reference to the accompanying drawings. For a better understanding of the present invention, particular components will be described. Those skilled in the art will appreciate that various modifications may be made without departing from the scope of the invention.

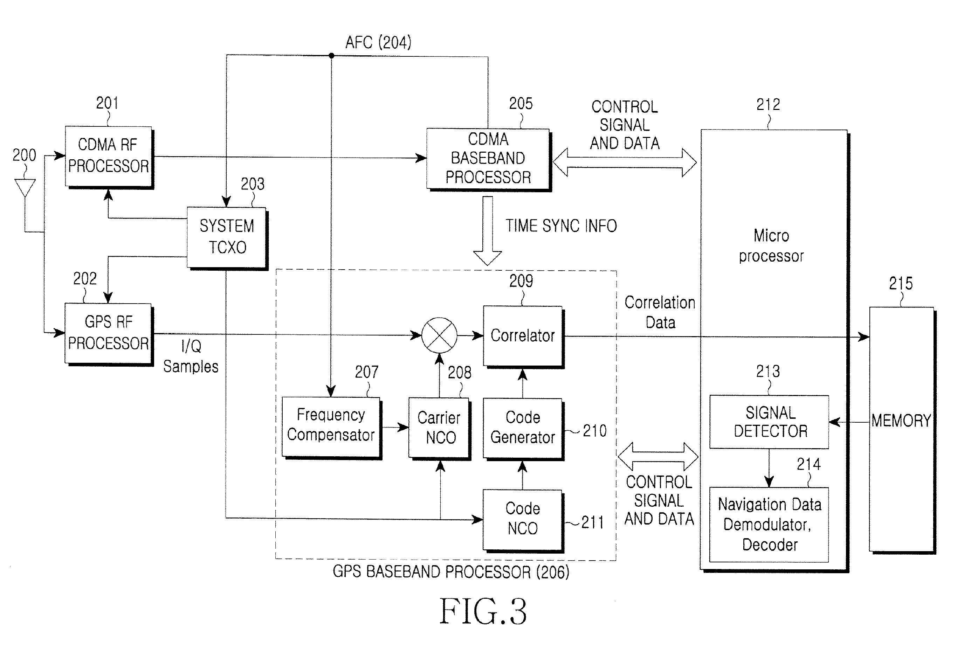

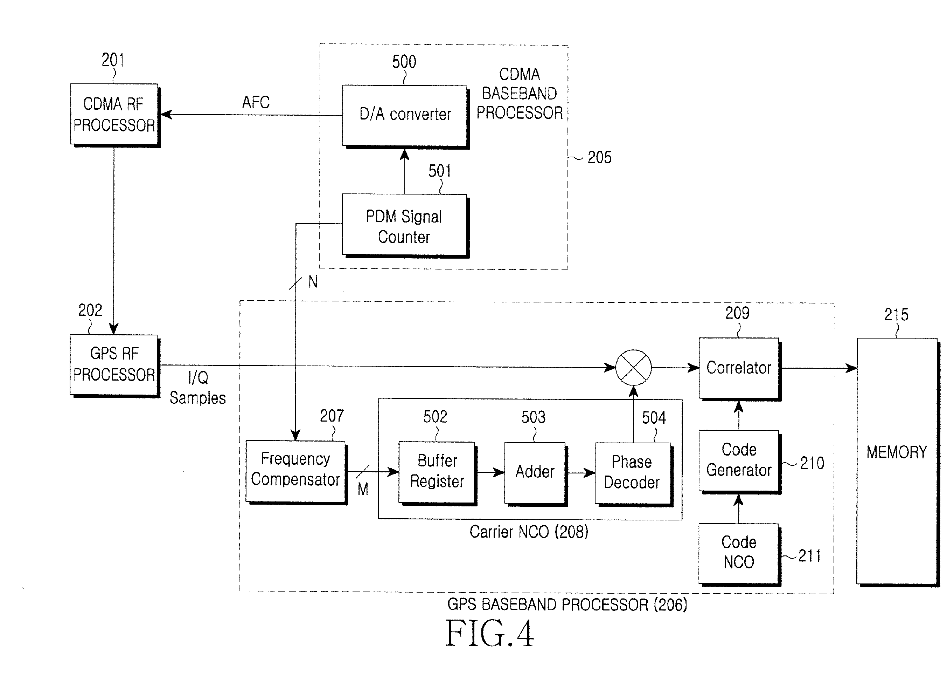

FIG. 3 is a block diagram illustrating a structure of a mobile communication terminal including a GPS receiver in accordance with of the present invention. Referring to FIG. 3, the mobile communication terminal includes an antenna 200 for transmitting a data signal to, and receiving a data signal from, a GPS satellite, a code division multiple access (CDMA) radio frequency (RF) processor 201, a GPS RF processor 202, a system TCXO 203 for generating and/or providing a reference frequency to various components in the mobile communication terminal, and an automatic frequency control (AFC) 204 implemented with a frequency difference detector (FDD), a loop filer and a digital-to-analog converter (DAC) (not illustrated). In accordance with the present invention, the mobile communication terminal can include a CDMA baseband processor 205 for processing a CDMA signal. As illustrated in FIG. 4, the CDMA baseband processor 205 includes a digital-to-analog converter (DAC) 500 and a pulse density modulation (PDM) signal counter 501. A PDM signal generated from a PDM signal generator within the CDMA baseband processor 205 is set to a predetermined bit output of the PDM signal counter 501. An incremented value of the counter 501 is pre-computed by the CDMA baseband processor 205. Thus, a frequency of the system TCXO 203 to be changed can be predicted in advance. Alternatively, the frequency of the system TCXO 203 may be read from a particular register.

A GPS baseband processor 206 includes a frequency compensator 207 in accordance with the present invention. The GPS baseband processor 206 includes a carrier numerically controlled oscillator (NCO) 208, a correlator 209, a code generator 210, and a code NCO 211. In particular, the carrier NCO 208 includes a buffer register 502, an adder 503, and a phase decoder 504 as illustrated in FIG. 4. In particular, the buffer register 502 can store a value to be added by the adder 503 as a predetermined bit value. Thus, a frequency of a generated clock can be changed. Further, the phase decoder 504 performs an operation for changing a resulting value from the adder 503 to a corresponding sine or cosine value.

An operation for sharing the system TCXO in accordance with the present invention will be described in detail with reference to FIGs. 3, 4, and 6. In accordance with the present invention, an arbitrary value is set and can be dynamically changed according to state information. It is assumed that a PDM counter value for maintaining a GPS carrier tracking loop in a lock state is 2000, an output frequency of the system TCXO is 20 MHz, and a frequency variation $\Delta f_{TCXO}$ corresponding to a 1-bit variation of the PDM counter with a predetermined bit is 0.02 MHz. Further, it is assumed that a buffer register value of the GPS carrier NCO 208 is 400 and an output frequency of the system TCXO is 5 MHz when the GPS carrier tracking loop is maintained in the lock state.

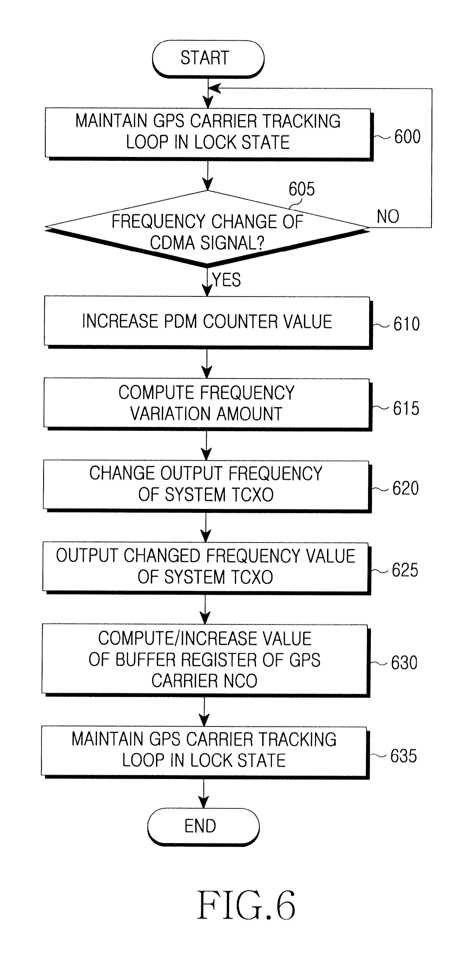

With reference to Fig. 6, when the GPS carrier tracking loop is maintained in the lock state in step 600, a frequency change of a CDMA signal input to the mobile communication terminal due to motion of the user is detected in step 605. If a frequency change is detected in step 605, the step 610 is performed. In step 610, an operation for increasing a value of the PDM counter is performed for synchronization acquisition according to the frequency change of the CDMA signal input to the mobile communication terminal. In step 615, an operation for computing a frequency variation according to the increased value of the PDM counter is performed. For example, assuming that the value of the PDM counter has been increased from 2000 to 2100, a frequency variation mapped to a difference of 100 becomes 2MHz. In step 620, an operation for changing an output frequency of the system TCXO is performed according to the computed frequency variation. Thus, a stabilization operation can be performed according to the output frequency change of the system TCXO and the frequency change of the CDMA signal.

In the above-described example, the output frequency of the system TCXO is changed from 20MHz to 22MHz for the stabilization operation according to the frequency change of the CDMA signal. Thus, the PDM signal counter 501 of the CDMA baseband processor 205 outputs the changed frequency value to the frequency compensator 207 of the GPS baseband processor 206. At this time, the frequency of the system TCXO is changed while carrier phase lock is maintained in the GPS baseband processor 206. That is, as the frequency of the system TCXO is increased by 2 MHz and is set to 22 MHz, a GPS intermediate frequency (IF) value is changed. However, because the value of the buffer register 502 of the GPS carrier NCO 208 is set to 400 (5 MHz), the GPS carrier tracking loop is not maintained in the lock state. Thus, when the frequency of the system TCXO is increased by 2 MHz, an operation for computing a value of the buffer register 502 of the GPS carrier NCO 208 is performed by Equation (1) in step 630.

$$\Delta f = \text{(GPS IF variation according to frequency variation of system TCXO)} \times \Delta f_{TCXO} \quad\text{................................................................................Equation (1)}$$

For example, when a frequency variation $\Delta f$ of the GPS carrier NCO computed by Equation (1) is 0.006MHz, a value of the buffer register 502 of the GPS carrier NCO 208 is increased by 0.006MHz. Thus, in step 635, the lock state is maintained according to the increased value of the buffer register 502 of the GPS carrier NCO 208, regardless of the AFC operation of the CDMA baseband processor. If frequency variation decreases, phase lock state is not maintained and therefore navigation data cannot be correctly demodulated.

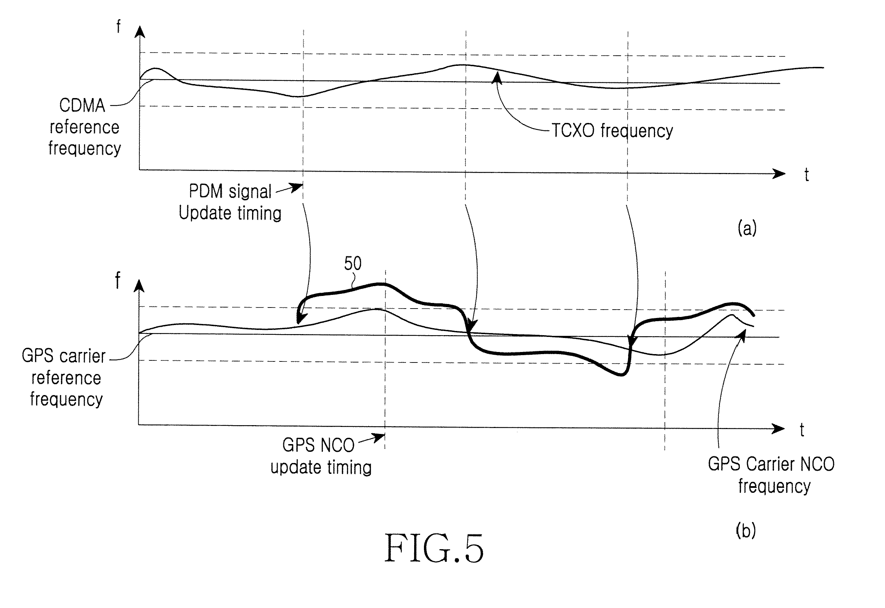

FIG. 5 is a graph illustrating a reference frequency variation according to a shared system TCXO in accordance with the present invention. As illustrated in FIG. 5A, the mobile communication terminal maintains a system TCXO frequency and a CDMA response frequency in a predefined range by AFC through frequency adjustment according to a PDM signal variation time. FIG. 5B illustrates a variation in a GPS carrier NCO frequency. If a frequency variation value is not compensated when the system TCXO frequency is changed by the AFC coupled to the CDMA baseband processor, the GPS carrier NCO frequency, is out of a frequency error range as indicated by reference numeral 50. When the GPS baseband processor and the CDMA baseband processor simultaneously operate and share the TCXO frequency, the frequency compensator 207 performs a frequency compensation operation according to a changed value of the PDM signal counter 501. In this case, a value of the buffer register 502 of the GPS carrier NCO 208 is changed, such that the GPS carrier-phase tracking loop can be continuously maintained in the lock state.

When a GPS operation is limited or an AFC operation of a CDMA baseband is alternately performed in the GPS operation in a state in which a GPS processor and a CDMA processor use their TCXOs or share one TCXO, the reception performance of a GPS signal may be conventionally degraded. However, the present invention can reduce the degradation of the reception performance of a GPS signal and can reduce a size of a mobile terminal.

Although exemplary embodiments of the present invention have been disclosed for illustrative purposes, those skilled in the art will appreciate that various modifications, additions, and substitutions are possible, without departing from the scope of the present invention. For example, the present invention can also be applied to other global positioning systems than GPS. Therefore, the present invention is not limited to the above-described embodiments, but is defined by the following claims.

**Claims**

1. An apparatus for sharing a temperature compensated crystal oscillator, TCXO, of a mobile terminal using a global positioning system, comprising:

   a communication system processor for performing a process for a mobile communication system, computing a frequency variation according to a frequency change and outputting a value of the computed frequency variation to a system TCXO and a global positioning system processor; and
   the global positioning system processor for receiving and processing a global positioning system signal, receiving a value of the computed frequency variation from the communication system processor, and performing an operation for frequency compensation according to the value.

2. The apparatus of claim 1, wherein the communication system processor comprises:

   a pulse density modulation signal controller for computing the frequency variation and outputting the value of the computed frequency variation to the system TCXO.

3. The apparatus of claim 1 or 2, wherein the global positioning system processor comprises:

   a carrier numerically controlled oscillator, NCO, for performing the operation for the frequency compensation according to the value received from the communication system processor; and
   a frequency compensator for compensating a frequency according to a value computed by the carrier NCO.

4. The apparatus of claim 3, wherein the carrier NCO comprises:

   an adder for performing an operation according to the frequency change; and
   a buffer register for storing a predetermined value for the operation.

5. A method for sharing a temperature compensated crystal oscillator, TCXO, of a mobile terminal for a global positioning system, comprising the steps of:

   detecting a frequency variation of a communication system and comparing a value of the frequency variation with a predetermined reference value;
   adjusting a frequency value of a system TCXO according to a comparison result; and
   synchronizing the TCXO to a base station signal according to an automatic frequency control operation.

EP 1 821 114 A2

101 MODEM TCXO

AFC (105)

102 CDMA RF PROCESSOR

100

106 CDMA BASEBAND PROCESSOR

CONTROL SIGNAL AND DATA

112 Micro processor

TIME SYNC INFO

103 GPS RF PROCESSOR

I/Q Samples

109 Correlator

Correlation Data

115 MEMORY

108 Carrier NCO

Code Generator 110

113 SIGNAL DETECTOR

104 GPS TCXO

Code NCO 111

CONTROL SIGNAL AND DATA

114 Navigation Data Demodulator, Decoder

GPS BASEBAND PROCESSOR (107)

FIG.1

FIG.2

EP 1 821 114 A2

FIG.3

EP 1 821 114 A2

FIG.4

f

CDMA
reference
frequency

TCXO frequency

PDM signal
Update timing

(a)

50

f

GPS carrier
reference
frequency

GPS NCO
update timing

GPS Carrier NCO
frequency

(b)

FIG.5

EP 1 821 114 A2

START

↓

MAINTAIN GPS CARRIER TRACKING
LOOP IN LOCK STATE ～ 600

↓

FREQUENCY CHANGE OF
CDMA SIGNAL? — 605 — NO

↓ YES

INCREASE PDM COUNTER VALUE ～ 610

↓

COMPUTE FREQUENCY
VARIATION AMOUNT ～ 615

↓

CHANGE OUTPUT FREQUENCY
OF SYSTEM TCXO ～ 620

↓

OUTPUT CHANGED FREQUENCY VALUE
OF SYSTEM TCXO ～ 625

↓

COMPUTE/INCREASE VALUE
OF BUFFER REGISTER OF GPS
CARRIER NCO ～ 630

↓

MAINTAIN GPS CARRIER TRACKING
LOOP IN LOCK STATE ～ 635

↓

END

FIG.6